# EUROPEAN PATENT APPLICATION

(11) **EP 2 114 063 A1**
(43) Date of publication of application: **04.11.2009**
(21) Application number: 08008357.9
(22) Date of filing: 02.05.2008
(51) Int. Cl.: H04M 17/00, H04M 15/00, H04W 4/00

(54) **Advanced pre-provisioning**

(71) Applicant: Nokia Siemens Networks Oy, 02610 Espoo (FI)
(72) Inventor: The designation of the inventor has not yet been filed
(74) Representative: Krombach, Rainer

(57) **Abstract**

A network element capable of handling a pre-provisioned subscription in a wireless telecommunications network comprising:
a storage medium which is capable of storing an IMSI corresponding to an IMSI in a pre-paid subscription to be activated as an active subscription;
a storage medium which is capable of storing an MSISDN which is not to be used as the valid subscriber accessible identity of an active subscription;
a verifier which is capable of checking whether the MSISDN is valid or is a dummy MSISDN which is not to be used as the valid MSISDN of an active subscription; and
an exchanger which, in the event of the MSISDN being determined to be a dummy MSISDN, is capable of exchanging the dummy MSISDN for a valid MSISDN which is combinable with the IMSI to generate a pre-paid subscription capable of activation.

## Description

The present invention relates to methods and systems for handling mobile subscribers in a network. It is particularly related to methods, systems, and computer program products for provisioning network elements, such as home location registers (HLRs), and mobile terminals with pre-paid mobile subscriber information.

In mobile telecommunications networks, it is necessary for subscriptions to be set up before they can be put it use, that is activated. Setting up a subscription is referred to as "provisioning" and involves creating a complete subscription which is active in the relevant network database/register, that is an HLR.

It is typical for a significant number of subscribers to a wireless network service to be pre-paid subscribers with the others being post-paid subscribers. Network operators like to use pre-provisioning to create the subscriptions in the network system before they are handed over to subscribers to enable flexible SIM card delivery via appropriate retail chains. Pre-provisioning means the main parts (at least the required identities and the authentication data) of a subscription are created in the network, either in a back-end repository or even directly in an HLR. The subscription data is valid but the subscription is not yet active. Some parts of the pre-provisioned subscription may be in compressed form to be opened during the activation, for example supplementary service parameters. Activation may be automatic or it may require human intervention depending on the implementation. These pre-provisioned subscriptions are activated only on a demand basis, when a subscriber identity module (SIM) card is really taken into use by a subscriber.

A subscriber may be identified as pre-paid or post-paid on the basis of the international mobile station identifier (IMSI), which is stored on the SIM card inserted in the subscriber's mobile terminal (for example mobile phone handset).

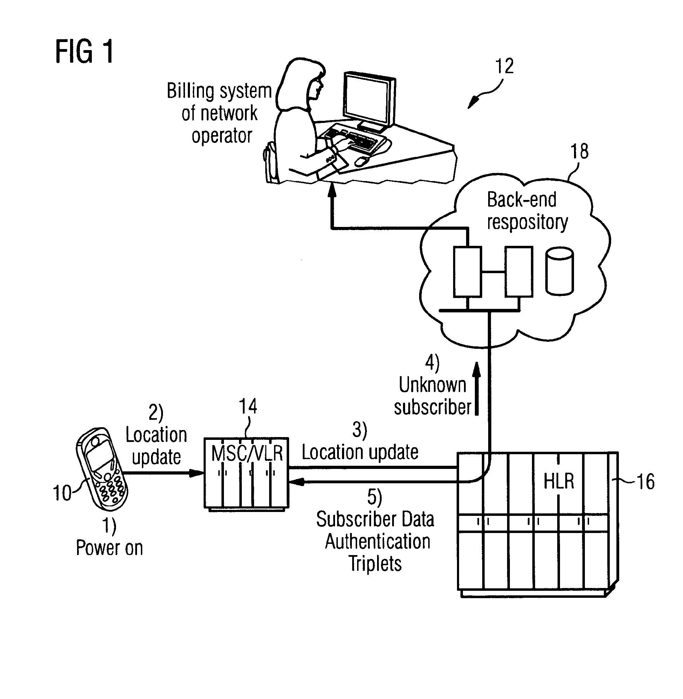

The activation of a pre-paid subscription with a network will now be described with reference to Figure 1. Let us assume a potential subscriber chooses to become a pre-paid customer of a particular network operator. The subscriber goes to a suitable retail location and, since he already has a mobile terminal 10, buys a pre-paid SIM card. After putting the SIM card in the mobile terminal, the subscriber switches on the mobile terminal 10. The mobile terminal 10 sends a location update message to a network 12, and the location update message is handled by an MSC/VLR (mobile switching centre/visitor location register) 14 in the network 12, and a MAP (mobile application protocol) operation is carried out between the VLR and an HLR 16. The VLR sends a request to the HLR 16 to store a VLR address. The request also serves the purposes of obtaining subscription information and notifying the HLR of the subscriber's current location, this being the MSC/VLR address/number. At the HLR, the IMSI contained in the location update message (often referred to as MAP_UPDATE_LOCATION) is used to access a record in the HLR. The record includes subscription information, including information regarding whether the subscription is pre-paid or post-paid.

In the case of a pre-paid subscriber calling for the first time, the HLR 16 notices that it has no subscription relating to this subscriber (that is the IMSI is not found, and therefore relates to an "unknown subscriber") and so a request is sent to a back-end repository 18 to check if a subscription relating to the particular IMSI is available there. The back-end repository 18 is a storage system for subscription data to be used in various parts of the network. It is able to find the subscription relating to the particular IMSI since it has been pre-provisioned and so it sends to the HLR 16 relevant subscription information, which is typically the Mobile Subscriber Integrated Services Digital Network (MSISDN) number and other subscriber data relating to the particular IMSI, to be stored. The HLR 16 handles the location update operation, which involves updating the VLR with the necessary information. As a result of the first location update, the subscription is created in the HLR and the status of the subscription is "active".

In this arrangement, the pre-provisioned subscriptions contain both the IMSI and the MSISDN when they are created. Accordingly, this means that as many MSISDNs are reserved as there exist pre-provisioned SIM cards.

At the time of purchase, the potential subscriber is notified what his mobile terminal number will be (that is the MSISDN). The SIM card in the mobile terminal contains the relevant IMSI. On the network side, the pre-paid subscription has already been set up and the IMSI and related MSISDN are stored in the back-end repository awaiting activation of the pre-paid subscription.

In order to facilitate the activation of pre-paid services, mobile service providers have conventionally pre-provisioned data for all pre-paid SIM cards at the time the pre-paid SIM cards are issued, rather than when the pre-paid SIM cards are activated. This has involved assigning certain IMSIs to pre-provisioned pre-paid subscriptions and allocating a respective MSISDN to each subscription (and IMSI), and creating an entry (including an IMSI and related MSISDN) in the back-end repository for every issued pre-provisioned, pre-paid SIM card. The entry may contain other information about the subscription.

In some jurisdiction, wireless telecommunication service provides (referred to in the following as network operators although strictly speaking such a service provider does not need to actually run the operation of the network itself) are allocated a restricted number of MSISDNs at any one time for their new subscriptions. This can be the case, for example, in a country in which a governmental organisation controls the allocation of MSISDNs. It is often the case that there is an unpredictable period of time between pre-provisioning the subscription and the subscription being put into use - some pre-paid SIM cards may be activated months or even years after issuance. In other cases, some of the prepaid SIM cards may never be activated. This may occur, for example, when SIM cards are handed out as part of a promotion. Some of the recipients of the SIM cards might not use them and may even simply discard them.

In certain jurisdictions, governmental or other authorities have defined a fee which a network operator is charged for the MSISDNs to be allocated for its subscriptions.

Furthermore, because the network operator does not know when the SIM cards will be activated, and will typically pre-provision the entries which make up subscriptions in advance, pre-provisioning such entries wastes space and unnecessarily increases the size of the relevant databases. This leads to increased expense and possibly even increased look-up time for database access.

According to a first aspect of the invention, there is provided a method of pre-provisioning a subscription in a telecommunications network, the method comprising:
storing in the network a subscriber identity corresponding to a subscriber identity in a pre-paid subscription to be activated as an active subscription;
storing in the network a dummy subscriber accessible identity which is not to be used as the valid subscriber accessible identity of an active subscription; and
the dummy subscriber accessible identity being identifiable as such by the network and in response to such an identification, the dummy subscriber accessible identity being exchangeable for a valid subscriber accessible identity which can be combined with the subscriber identity to generate a pre-paid subscription capable of activation.

Preferably, the subscription is a pre-paid subscription. It may also be a pre-provisioned subscription.

Preferably, the subscriber identity is inaccessible by the subscriber. It might be an identity that the subscriber does not need to know in normal use of a mobile terminal which uses the subscriber identity. Preferably, the subscriber identity is a primary identity of a subscriber, a SIM card, or a mobile terminal. It may be an IMSI.

Preferably, the subscriber accessible identity is an identity that the subscriber does can have knowledge of in normal use of a mobile terminal which uses the subscriber accessible identity. Preferably, the subscriber identity is an external address. It may be an MSISDN.

Preferably, the subscriber identity and the subscriber accessible identity are stored in network elements. They may be stored in the same network element. The network element may be a back-end repository. A back-end repository is typically a server useable by various of the network elements in the network to provide subscription information.

Preferably, the subscriber identity is also stored on a pre-paid SIM card.

According to a second aspect of the invention, there is provided a subscription in a telecommunications network comprising:
a subscriber identity corresponding to a subscriber identity in a pre-paid subscription to be activated as an active subscription;
a dummy subscriber accessible identity which is not to be used as the valid subscriber accessible identity of an active subscription; and
the dummy subscriber accessible identity being identifiable as such by the network and in response to such an identification, the dummy subscriber accessible identity being exchangeable for a valid subscriber accessible identity which is combinable with the subscriber identity to generate a pre-paid subscription capable of activation.

Preferably, the subscriber identity is stored in the network. It may be stored in a network element of the network. Preferably, the dummy subscriber accessible identity is stored in the network. It may be stored in a network element of the network. It may be stored in the same network element as the subscriber identity.

According to a third aspect of the invention, there is provided a network element capable of handling a subscription in a telecommunications network comprising:
a storage medium which is capable of storing a subscriber identity corresponding to a subscriber identity in a pre-paid subscription to be activated as an active subscription;
a storage medium which is capable of storing a subscriber accessible identity which is not to be used as the valid subscriber accessible identity of an active subscription;
a verifier which is capable of checking whether the subscriber accessible identity is valid or is a dummy subscriber accessible identity which is not to be used as the valid subscriber accessible identity of an active subscription; and
an exchanger which, in the event of the subscriber accessible identity being determined to be a dummy subscriber accessible identity, is capable of exchanging the dummy subscriber accessible identity for a valid subscriber accessible identity which is combinable with the subscriber identity to generate a pre-paid subscription capable of activation.

According to a fourth aspect of the invention, there is provided a network element according to the third aspect of the invention comprising a plurality of pre-provisioned subscriptions according to the second aspect of the invention.

According to a fifth aspect of the invention, there is provided a network incorporating a network element according to the third or fourth aspects of the invention.

According to a sixth aspect of the invention, there is provided a method of activating a subscription in a telecommunications network, the method comprising:
receiving a subscriber identity;
checking whether a stored subscriber accessible identity associated with the subscriber identity is valid or is a dummy subscriber accessible identity which is not to be used as the valid subscriber accessible identity of an active subscription;
in the event of the subscriber accessible identity is determined to be a dummy subscriber accessible identity, exchanging the dummy subscriber accessible identity for a valid subscriber accessible identity which is combinable with the subscriber identity to generate a pre-paid subscription capable of activation; and
activating a subscription based on that subscriber identity and the subscriber accessible identity;

Preferably, the method of pre-provisioning the subscription comprises the step of receiving a location update message associated with the subscription to the network.

Preferably, the method comprises a potential subscriber buying a pre-paid SIM card. The pre-paid SIM card may be bought as a package together with a mobile terminal such as a mobile phone.

Preferably, the method comprises, in the case of a pre-paid subscriber calling for the first time, a network element determining that the received subscriber identity is not known to it, and then requesting that another network element checks whether it has a subscription which relates to the subscriber identity.

Preferably, the method comprises the other network element finding the subscription relating to the subscriber identity since it has been pre-provisioned and then determining that the subscriber accessible identity stored in relation to the subscriber identity is a dummy subscriber accessible identity.

Preferably, the method comprises exchanging the dummy subscriber accessible identity for a valid subscriber accessible identity which has been pre-stored in the other network element. Alternatively, the other network element sends a request to an external server, for example one under the control of a governmental organisation which allocates subscriber accessible identities for use by network operators, which allocates a valid subscriber accessible identity in response. In this case, the term external server may mean a server which is not under the control of the network operator but is rather controlled by some other unrelated party.

Preferably, the method comprises notifying the subscriber of the subscriber accessible identity. The subscriber may be notified by sending an SMS message to the mobile terminal containing a SIM card associated with the subscription.

Preferably, the method comprises automatically completing the subscription can during activation with valid data, that is by assigning the subscriber accessible identity dynamically.

According to a seventh aspect of the invention, there is provided a computer program product comprising software code that when executed on a computing system performs a method of activating a pre-provisioned subscription in a telecommunications network according to the sixth aspect of the invention.

The invention can be considered to be advanced pre-provisioning. That is, real subscription data to be stored in the network during the pre-provisioning is minimised and the subscription can be completed automatically during the activation with valid data, that is by assigning the MSISDN dynamically.

The present invention will now be described, by way of example only, with reference to the accompanying drawings, in which:
Figure 1 shows a pre-provisioning system according to the prior art;
Figure 2 shows a pre-provisioning system according in an embodiment of the invention; and
Figure 3 shows a back-end repository according to the invention.

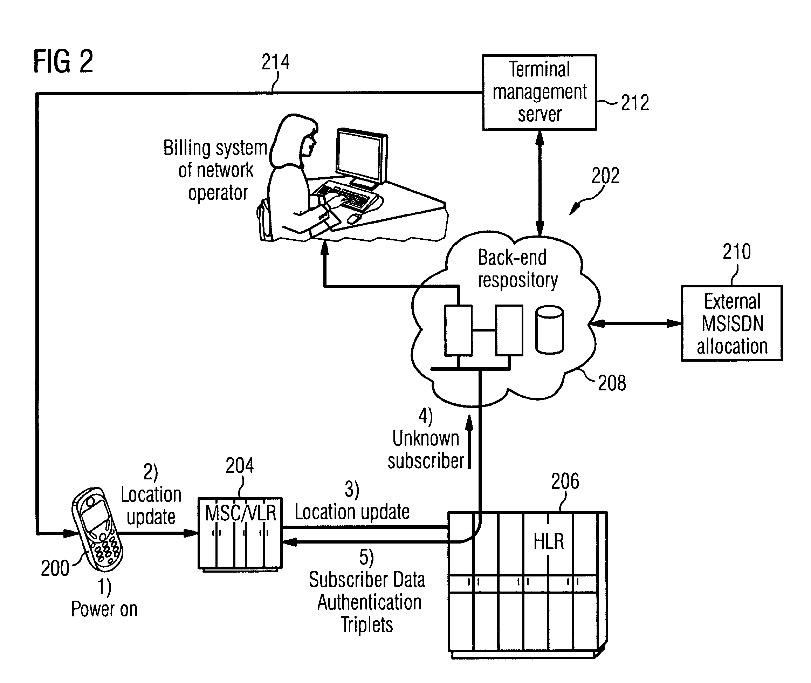

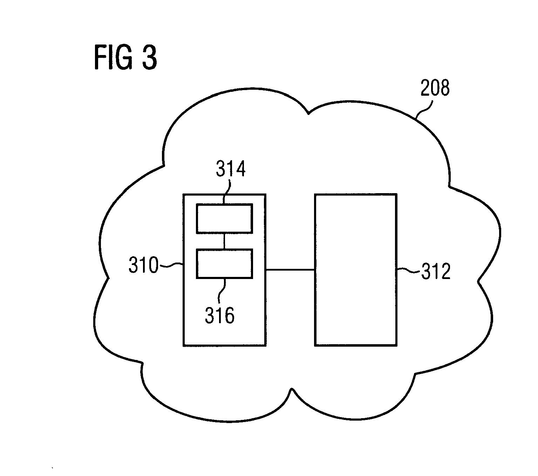

Figure 2 shows a pre-provisioning system according in an embodiment of the invention. Let us assume a potential subscriber chooses to become a pre-paid customer of a particular network operator. The subscriber goes to a suitable retail location and, since he already has a mobile terminal 200, buys a pre-paid SIM card. After putting the SIM card in the mobile terminal, the subscriber switches the terminal on. The terminal sends a location update to a network 202 in this case to an MSC/VLR 204, which then carries out a MAP (mobile application protocol) operation and the VLR sends a request to an HLR 206 to store a VLR address. In the case of a pre-paid subscriber calling for the first time, the HLR 206 notices that it has no subscription relating to this subscriber (that is the IMSI is not found, and relates to an "unknown subscriber") and so a request is sent to a back-end repository 208 to check if a subscription relating to the particular IMSI is available there. As shown in Figure 3, the back-end repository 208 comprises a server part 310 and a database part 312. The server part 310 contains logic to implement the functionality of the invention. The server part 310 is capable of running the Lightweight Directory Access Protocol (LDAP) which is an application protocol for querying and modifying directory services.

The back-end repository 208 uses its server part 310 to find the subscription relating to the particular IMSI in its database part 312 since the subscription has been pre-provisioned. In the case of advanced pre-provisioned subscriptions, the server part 312 uses a verification block 314 to determine if the MSISDN stored in relation to this IMSI is a dummy MSISDN. A dummy MSISDN can be represented in a number of ways. In this embodiment, it is a sequence of numbers which are very unlike a valid MSISDN and so easy to distinguish by the server part 310. It can, for example, be a sequence of zeroes or nines. In response to the verification block 314 determining that the MSISDN is a dummy, the back-end repository 208 instructs an exchange block 316 in the server part 312 to replace the dummy MSISDN with a valid MSISDN so that a valid MSISDN is assigned to the IMSI.

In one embodiment, the valid MSISDN is pre-stored in the back-end repository 208 (for example in the database part 312) although it is not always desirable to do this as discussed above because this can result in the restricted number of MSISDNs which have been allocated for that network operator being reserved for pre-paid subscriptions but unused. Therefore, in the preferred embodiment, which is shown in Figure 2, the back-end repository 208 sends a request to an external server 210, for example one under the control of a governmental organisation which allocates MSISDNs for use by network operators, which allocates a valid MSISDN directly in response to a specific request for one. Naturally, the external server 210 does not necessarily have to send out MSISDNs one by one but can for example send a set (for example 100 MSISDNs) which can be used up by the back-end repository 208 as and when they are required and further sets of MSISDNS be requested when the back-end repository 208 has run out of available MSISDNs or is about to do so. In a modification of this embodiment, a certain number of MSISDNs may be reserved as a buffer amount and periodically this is replenished if the number of MSISDNs held in the buffer falls below a certain threshold or otherwise fulfils certain criteria. Accord-ingly, when the network operator creates a set of pre-provisioned, pre-paid subscriptions, it also creates a smaller set of MSISDNs, which can be assigned to the pre-provisioned pre-paid subscriptions when they are activated.

Now that the back-end repository 208 has identified an MSISDN to be used with the IMSI of the mobile terminal 200, it is able to combine the valid MSISDN with the IMSI (and with any other relevant subscription information) to create a subscription which is capable of being activated. The valid MSISDN is stored in back-end repository 208 which then sends relevant subscription information (such as the MSISDN number and other subscriber data relating to the particular IMSI) to the HLR 16 to be stored. (The valid MSISDN number is also stored in the VLR.) The back-end repository then arranges for the subscriber to be notified of his mobile terminal number (MSISDN). It does this by sending a request to a terminal management server 212 for an SMS message 214 to be sent to the mobile terminal 200 containing this information (and also to notify the subscriber that the mobile terminal 200, or more specifically the SIM card it contains, can be used for making and receiving calls or for other telecommunications purposes). Such a "Welcome SMS" may also contain additional data such as service provider/network specific configuration data for the mobile terminal 200. Although it is possible for the information contained in the SMS to be provided to the subscriber by some other means, for example to be provided to a retailer's terminal which is connected to systems of the network operator, or by telephone, SMS notification is preferred. It should be noted that because the SIM card already has an IMSI, the SMS message can be sent to immediately on allocation of the MSISDN to the relevant MSISDN and although it will not be deliverable until location update has been completed by the network 202 for the mobile terminal 200. Until that time, it will be stored in a short message centre located in the MSC (although it can instead be a separate server) for automatic relay to the mobile terminal 200 at some later point.

Since the HLR 206 receives the relevant subscription information including the MSISDN, it is able to handle the location update operation in the conventional way, which involves updating the VLR with the necessary information. As a result of the first location update, the subscription is created in the HLR and the status of the subscription is "active", It should be noted that the back-end repository 208 does not itself send the SMS message to the mobile terminal 200 notifying the subscriber of the activation of the subscription but this is actually done by the terminal management server 212.

In this arrangement, the pre-provisioned subscriptions contain the IMSIs but not the MSISDNs when they are created.

At the time of purchase, the potential subscriber is not notified of his mobile terminal number (MSISDN) because it has not at this stage been determined. The SIM card in the mobile terminal contains the relevant IMSI. On the network side, the pre-paid subscription has already been set up and the IMSI is stored in the back-end repository awaiting activation of the pre-paid subscription but does not yet have associated with it an MSISDN.

The invention provides a mechanism to reduce the need to reserve a large number of MSISDNs, but still allows a large number of pre-provisioned SIM cards to be created and provided to subscribers to be activated when required. For example there can 100,000 pre-provisioned SIM cards and only 10,000 MSISDNs.

The invention is suitable for use in any system in which a subscription comprises a subscriber identity and a subscriber accessible identity, particularly a system the operation of which is based on SIM cards. Therefore, it is particularly suitable to GSM and UMTS systems and for use in conjunction with relevant network elements in such systems, for example, the HLR and the real-time back-end repository connected to the HLR.

The invention is suitable for implementation in various back-end repository products which are currently available such as the Nokia Siemens Networks Subscriber Data Repository (NSR) or One-NDS (Network Directory Server). In an embodiment in which the invention is implemented in the NSR product, pre-provisioning can be done through a single interface for example, MML over SFTP or MML over SSH. The following HLR provisioning interfaces are available - MML, IMSI file, or FSM (Fast Subscriber Management). Provisioning protocols other than MML may be used such as those based on HTTP and XML, like SOAP and SPML. LDAP may be used in some cases.

The techniques described herein may be implemented by various means. For example, these techniques may be implemented in hardware (one or more devices), firmware (one or more devices), software (one or more modules), or combinations thereof. For a firmware or software, implementation can be through modules (for example, procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

It will be obvious to a person skilled in the art that, as the technology advances, the inventive concept can be implemented in various ways. The invention and its embodiments are not limited to the examples described above but may vary within the scope of the claims.

## Claims

1. A method of activating a subscription in a telecommunications network, the method comprising:
receiving a subscriber identity;
checking whether a stored subscriber accessible identity associated with the subscriber identity is valid or is a dummy subscriber accessible identity which is not to be used as the valid subscriber accessible identity of an active subscription;
in the event of the subscriber accessible identity is determined to be a dummy subscriber accessible identity, exchanging the dummy subscriber accessible identity for a valid subscriber accessible identity which is combinable with the subscriber identity to generate a pre-paid subscription capable of activation; and
activating a subscription based on that subscriber identity and the subscriber accessible identity;

2. A method according to claim 1 in which the subscription is a pre-paid subscription.

3. A method according to claim 1 or claim 2 in which the subscriber identity is inaccessible by the subscriber.

4. A method according to any preceding claim in which the subscriber identity is an IMSI.

5. A method according to any preceding claim in which the subscriber accessible identity is MSISDN.

6. A method according to any preceding claim in which the method comprises the step of receiving a location update message associated with the subscription to the telecommunications network.

7. A method according to any preceding claim in which the call associated with the subscription is made for the first time, a network element determines that the received subscriber identity is not known to it, and then another network element checks whether it has a subscription which relates to the subscriber identity.

8. A method according to any preceding claim in which the dummy subscriber accessible identity is exchanged for a valid subscriber accessible identity which is received from an external server in response to a request to allocate a valid subscriber accessible identity.

9. A method according to any preceding claim in which the subscriber is notified of the subscriber accessible identity as a result of exchanging the dummy subscriber accessible identity for a valid subscriber accessible identity which is combinable with the subscriber identity to generate a pre-paid subscription capable of activation,

10. A method according to claim 9 in which the subscriber is notified by sending an SMS message to the mobile terminal containing a SIM card associated with the subscription.

11. A method according to any preceding claim in which the subscriber identity and the subscriber accessible identity are stored in network elements.

12. A method according to any preceding claim in which the subscriber identity and the subscriber accessible identity are stored in a back-end repository.

13. A method according to any of claims 11 or 12 in which the subscriber identity is also stored on a pre-paid SIM card.

14. A subscription in a telecommunications network comprising:
a subscriber identity corresponding to a subscriber identity in a pre-paid subscription to be activated as an active subscription;
a dummy subscriber accessible identity which is not to be used as the valid subscriber accessible identity of an active subscription; and
the dummy subscriber accessible identity being identifiable as such by the network and in response to such an identification, the dummy subscriber accessible identity being exchangeable for a valid subscriber accessible identity which is combinable with the subscriber identity to generate a pre-paid subscription capable of activation.

15. A network element capable of handling a subscription in a telecommunications network comprising:
a storage medium which is capable of storing a subscriber identity corresponding to a subscriber identity in a pre-paid subscription to be activated as an active subscription;
a storage medium which is capable of storing a subscriber accessible identity which is not to be used as the valid subscriber accessible identity of an active subscription;
a verifier which is capable of checking whether the subscriber accessible identity is valid or is a dummy subscriber accessible identity which is not to be used as the valid subscriber accessible identity of an active subscription; and
an exchanger which, in the event of the subscriber accessible identity being determined to be a dummy subscriber accessible identity, is capable of exchanging the dummy subscriber accessible identity for a valid subscriber accessible identity which is combinable with the subscriber identity to generate a pre-paid subscription capable of activation.

16. A network element according to claim 15 comprising a plurality of pre-provisioned subscriptions.

17. A telecommunications network comprising a network element capable of handling a subscription, the network element comprising:
a storage medium which is capable of storing a subscriber identity corresponding to a subscriber identity in a pre-paid subscription to be activated as an active subscription;
a storage medium which is capable of storing a subscriber accessible identity which is not to be used as the valid subscriber accessible identity of an active subscription;
a verifier which is capable of checking whether the subscriber accessible identity is valid or is a dummy subscriber accessible identity which is not to be used as the valid subscriber accessible identity of an active subscription; and
an exchanger which, in the event of the subscriber accessible identity being determined to be a dummy subscriber accessible identity, is capable of exchanging the dummy subscriber accessible identity for a valid subscriber accessible identity which is combinable with the subscriber identity to generate a pre-paid subscription capable of activation.

18. A method of pre-provisioning a subscription in a telecommunications network, the method comprising:
storing in the network a subscriber identity corresponding to a subscriber identity in a pre-paid subscription to be activated as an active subscription;
storing in the network a dummy subscriber accessible identity which is not to be used as the valid subscriber accessible identity of an active subscription; and
the dummy subscriber accessible identity being identifiable as such by the network and in response to such an identification, the dummy subscriber accessible identity being exchangeable for a valid subscriber accessible identity which can be combined with the subscriber identity to generate a pre-paid subscription capable of activation.

19. A computer program product comprising software code that when executed on a computing system performs a method of activating a subscription in a telecommunications network according to any of claims 1 to 13.
